# EUROPEAN PATENT APPLICATION

(11) **EP 1 536 319 A1**
(43) Date of publication of application: **01.06.2005**
(21) Application number: 04257250.3
(22) Date of filing: 23.11.2004
(51) Int. Cl.: G06F 3/12, G06F 17/30, G06F 9/445

(54) **Client terminal for creating environment information thereof for receiving service from web server, method for controlling the same and program for making a computer perform the controlling method**

(30) Priority: 27.11.2003 JP 2003397755
(71) Applicant: CANON KABUSHIKI KAISHA, Ohta-ku, Tokyo (JP)
(72) Inventor: Suzuki, Hideyasu Canon Kabushiki Kaisha, Ohta-ku Tokyo (JP)
(74) Representative: Legg, Cyrus James Grahame

(57) **Abstract**

A client terminal obtains the environment information thereof (e.g. information about peripheral devices) and informs a Web server of the environment information with a reduced processing load, so as to receive services presented by the Web server (e.g. print services, scanning services). The client terminal creates the environment information corresponding to a request transmitted from the Web server and stores the environment information in a storage device. In case environment information is subsequently required, the client terminal may use the existing environment information, update part of the environment information, or add new environment information to the existing environment information with reference to the stored environment information instead of creating new environment information.

## Description

### BACKGROUND OF THE INVENTION

### Field of the Invention

The present invention relates to an information processing apparatus that can be connected to a server machine that presents Web page data to a client terminal via a network, where the Web page data can be displayed by a browser on the client terminal. The present invention further relates to an information processing method, and a recording medium and a program used therefor.

### Description of the Related Art

The Web server generates page data written in script languages such as Hyper Text Markup Language (HTML), Java® Script, VBScript, and so forth, and transmits the page data to a client terminal via a network such as the Internet. The client terminal displays the page data through a browser software program installed therein, and a user transmits information about the result of operations performed on the browser software program to the Web server. The Web server processes the information transmitted from the client terminal, generates new page data corresponding to the information, and transmits the new page data to the client terminal. The client terminal displays the new page data by using the browser software program. While the above-described procedures are performed, various types of services are presented to the user of the client terminal. The above-described services are referred to as Web services.

For designing the Web services, it is useful to utilize various types of environment information relating to the client terminal of the user. For example, the environment information includes information about printers, application software programs, and so forth, that can be used by the client terminal.

Therefore, a designer on the Web-server side creates a plug-in software program (an OCX module, for example) that can be installed on the client terminal by following predetermined procedures. The plug-in software program extends functions of the browser software program, so as to read the environment information of the client terminal. Further, where the plug-in software program requests the browser software program to post the environment information according to a request issued from the Web server, the client terminal transmits the environment information to the Web server by using the browser software program. Subsequently, the Web server can present services suitable for the client terminal of the user, based on the environment information obtained from the client terminal in the above-described manner.

However, according to the above-described known technology, it takes a significant amount of time to read the environment information. As for information about printers connected to the client terminal, for example, each of the printers is designed for using a predetermined type of output media that may be ordinary paper, glossy paper, cardboard paper, and so forth. Further, a predetermined size is designated for each of the types of output media. As the number of printers connected to the client terminal increases, the seriousness of the above-described problem also increases.

### SUMMARY OF THE INVENTION

Accordingly, the present invention provides an information processing apparatus that can transmit environment information of a client terminal (the information processing apparatus) to a Web server with a reduced processing load, an information processing method, and a recording medium and a program used therefor.

According to an aspect of the present invention, an information processing apparatus that can use contents provided by a Web server through a browser software program in the information processing apparatus is provided. The information processing apparatus includes: a creating unit for creating/updating environment information; a storing unit for storing the created/updated environment information in a storage device; and a transmission unit for transmitting the created environment information to the Web server via a network. After the creating unit has created environment information, the creating unit updates the environment information in response to an environment-information request transmitted from the Web server with reference to the environment information stored in the storage device. The contents presented by the Web server is determined according to the environment information.

According to another aspect of the present invention, a method for controlling an information processing apparatus that can use contents presented by a Web server through a browser software program in the information processing apparatus is provided. The controlling method includes steps of: creating/updating environment information; storing the created/updated environment information in a storage device; and transmitting the created/updated environment information to the Web server via a network. After environment information has been created and stored in the storage device, the environment information is updated in response to the environment-information request transmitted from the Web server with reference to the environment information stored in the storage device. The contents presented by the Web server is determined according to the environment information.

According to another aspect of the present invention, a program for making a computer system perform a method for controlling an information processing apparatus that can use contents presented by a Web server through a browser software program in the information processing apparatus according to the method described above is provided.

Further features and advantages of the present invention will become apparent from the following description of exemplary embodiments with reference to the attached drawings. It is to be noted that like reference characters designate the same or similar parts throughout the figures thereof.

### BRIEF DESCRIPTION OF THE DRAWINGS

The attached drawings, which are incorporated in and constitute a part of the specification, illustrate embodiments of the invention and, together with the description, serve to explain the principles of the invention.

Fig. 1 shows the schematic configuration of an information processing system including a client PC (an information processing apparatus) and a Web server according to an embodiment of the present invention.

Fig. 2 shows an example hardware configuration of the client PC shown in Fig. 1.

Fig. 3 shows an example information configuration of a RAM (random access memory) under the control of a PLUG-IN MODULE.

Fig. 4 is a flowchart illustrating operations performed for processing environment information of the client PC.

Fig. 5 shows an example hardware configuration for briefly describing the flowchart of Fig. 4.

Figs. 6-11 illustrate the configuration and details of data of the RAM that are changed according to the flow shown in Fig. 4, where new TABLE is generated.

Figs. 12-17 illustrate the configuration and details of data of the RAM that are changed according to the flow shown in Fig. 4, where existing environment information is used.

### DESCRIPTION OF THE EMBODIMENTS

Exemplary embodiments of the present invention will now be described in detail with reference to the attached drawings. It is to be understood that elements disclosed in the following embodiments are given by way of example and the scope of the present invention is not limited thereto.

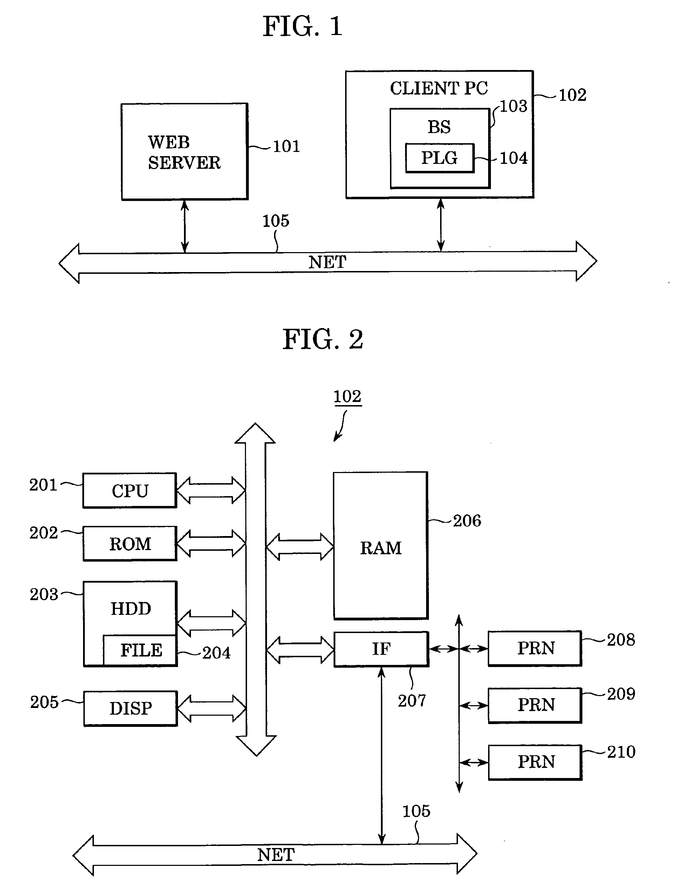

First, the schematic configuration of an information processing system according to an embodiment of the present invention will be described with reference to Fig. 1. The information processing system includes a client personal computer (PC) functioning as an information processing apparatus and a Web server.

In this drawing, the information processing system includes a Web server 101, a client PC 102, and a network (NET) 105 connected therebetween. In the client PC 102, a browser software program 103 requests predetermined page data from the Web server 101 via the NET 105 and displays the page data transmitted from the Web server 101. The NET 105 may be, for example, the Internet involving various types of equipment and apparatuses on its routes. However, the configuration of the NET 105 will not be described, since it is not essential for achieving the present invention.

The Browser Software program 103 includes a plug-in module 104 installed therein where the plug-in module is a program that reads the condition (environment information) of a printer connected to the client PC 102, or a printer that can be used via a local area network (LAN) or the like. While the exemplary embodiments herein are described with reference to printers, the present invention is not limited to printers. The plug-in module(s) can read the condition (environment information) of any peripheral device, for example, a scanner, a multi-function peripheral (MFP) device and the like. The Browser Software program 103 starts the PLUG-IN MODULE 104 according to an instruction in the page data transmitted from the Web server 101.

The started PLUG-IN MODULE 104 reads the printer condition, as the environment information. Then, the PLUG-IN MODULE 104 stores the read environment information in a predetermined area and instructs the Browser Software program 103 to post the environment information to a predetermined URL (a URL indicating the Web server 101) stored in a predetermined area. Subsequently, the Browser Software program 103 posts the environment information specified by the PLUG-IN MODULE 104 to the URL (the Web server 101). The Web server 101 informs the client PC 102 of the information about a URL for providing new page data corresponding to the posted environment information. The client PC 102 accesses the URL and displays the new page data through the Browser Software program 103. In this embodiment, the posting denotes transmission of specified data from the Browser Software program 103 to the Web server 101 according to an instruction transmitted from the PLUG-IN MODULE 104, for example.

Here, the Web server 101 presents print service to the client PC 102. Where the Web server 101 can present the print service to five types of printers A, B, C, D, and E, and where the posted environment information indicates that the printers A, D, and E are connected to the client PC 102, the Web server transmits information about a predetermined URL to the client PC 102. The client PC 102 accesses the predetermined URL and displays page data including a pull-down menu for selecting a predetermined printer from among the printers A, D, and E. It is to be noted that the types of printers to which the Web server 101 can present the print service can be changed, as required. For example, where the types of printers to which the Web server 101 can present the print service changes from the combination of A, B, C, D, and E to the combination of A, B, C, and D, the Web server transmits the information of a predetermined URL for displaying page data including a pull-down menu for selecting a predetermined printer from between the printers A and D to the client PC 102. Further, the Web server 101 stores information about the size and type of a form (output media), e.g., paper, that can be used for each of the printers and the page data includes a pull-down menu showing the above-described form information.

That is, the page data (the contents presented by the Web server) is determined according to the service of the Web server 101 and the environment information of the client 102.

Fig. 2 shows an example hardware configuration of the client PC 102 shown in Fig. 1. In this drawing, a central processing unit (CPU) 201 and a read-only memory (ROM) 202 are provided. When the client PC 102 is started, the CPU 201 reads a program or the like from the ROM 202. The ROM 202 stores a program for initializing the CPU 201, reading an operating system (OS) from a hard-disk drive (HDD) 203 (that will be described later) into a random access memory (RAM) 206 (that will be described later), and making preparations so that the CPU 201 can run the OS, for example. Although information stored in the ROM 202 is not limited to the above-described program, the details of the information will not be described, since they are not essential for achieving the present invention.

The RAM 206 denotes a writable and readable memory and a recording area to which the CPU 201 can have direct access. The use of the RAM 206 will be described later. The HDD 203 is a secondary storage device such as a magnetic hard disk storing the Browser Software program 103, the PLUG-IN MODULE 104, programs including various types of DRVs (drivers) (that will be described later), and data.

A FILE 204 denotes file-path information designating a predetermined file on the HDD 203. This file-path information includes the details of TABLE (printer environment) that will be described later. Where the FILE 204 does not exist, it indicates that information about the TABLE is not recorded. A DISP 205 denotes a display device. For example, a window on which the Browser Software program 103 displays page data is displayed on the DISP 205.

An IF 207 denotes an interface unit to which input devices including a keyboard, a mouse, and so forth, at least one printer (PRN), such as printers 208 to 210, and a NET 105 are connected. The IF 207 communicates with the Web server 101 shown in Fig. 1 via the NET 105. As shown in Fig. 2, each of the three printers 208 to 210 is locally connected to the IF 207. However, the present invention is not limited to the above-described configuration. On the contrary, a plurality of printers can be connected to the IF 207 via a network such as a LAN.

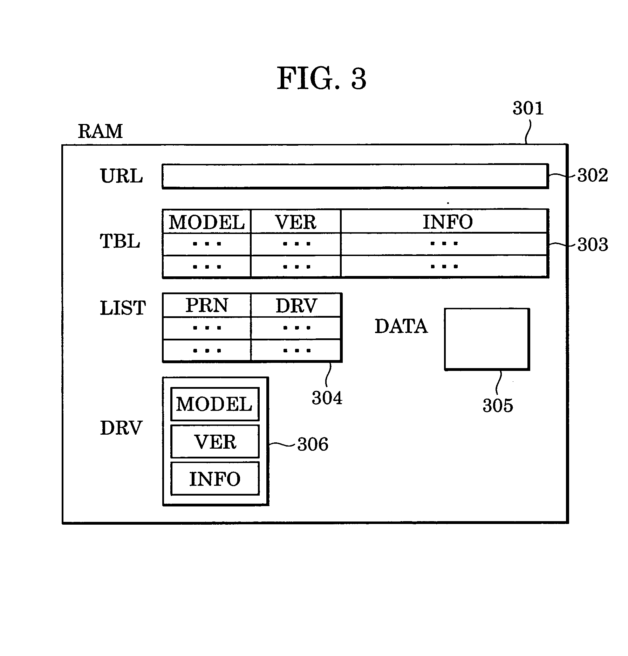

Fig. 3 shows the information configuration of the RAM 206 under the control of the above-described PLUG-IN MODULE 104. In this drawing, a storing area 302 stores a predetermined URL, that is, information about a transition destination (the address of a Web page) after the PLUG-IN MODULE 104 finishes its processing. The URL shown in the URL storing area 302 is set by the Browser Software program 103 according to the page data transmitted from the Web server 101.

A storing area 303 is a memory area for maintaining information about the printer environment (TABLE) on the RAM 206. When the PLUG-IN MODULE 104 is started, the TABLE is read from the FILE 204 at a predetermined position in the HDD 203 into a memory. When the PLUG-IN MODULE 104 terminates, the read TABLE is written into the FILE 204 at the predetermined position in the HDD 203. When the PLUG-IN MODULE 104 is started and a file relating to the TABLE does not exist in the FILE 204 at the predetermined position, the storing area 303 for the TABLE remains blank. The TABLE includes printer-model-name information (MODEL), driver-version information (VER), and printer information (INFO). The data configuration of the INFO will not be described, since it is not essential for achieving the present invention. The term MODEL denotes the model of a printer named by a driver developer and referred to as "model name" in the property information of the printer. In normal times, the MODEL cannot be manipulated by a user. The term VER denotes information about the version of a printer driver that will be described later.

A storing area 304 denotes a memory area for storing LIST, that is, information about the list of printers that can be used by the PLUG-IN MODULE 104. The term LIST denotes information including information that is the same as the MODEL of the TABLE and the driver name required for the MODEL. The LIST is generated when the PLUG-IN MODULE 104 performs its processing and one of the functions of the OS. The configuration of the LIST will not be described.

A storing area 305 denotes a memory area for storing an item of data (DATA) posted to the above-described URL, as a result of the processing of the PLUG-IN MODULE 104. For example, where a plurality of printers exists, as in the case of PRNs 208 to 210, items of information about the printers are coupled to one another and stored as the DATA. Here, the memory size of the storing area 305 is large enough for storing the DATA.

A storing area 306 is a memory area for storing a printer driver (DRV) required for making each of the PRN 208 to 210 perform print processing. The above-described Printer Drivers are read into a storing area 306 on the RAM 206 used by the PLUG-IN MODULE 104 shown in Fig. 3, so as to utilize the VER, INFO, and so forth that are entered into the Printer Drivers.

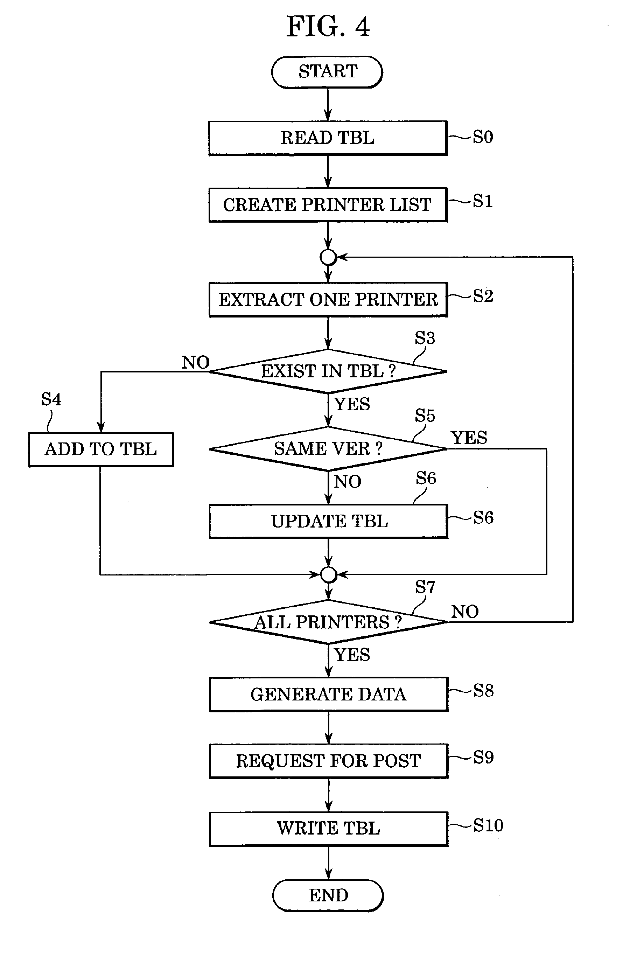

Operations for processing environment information performed in the client PC 102 will now be described. Fig. 4 is a flowchart showing the environment-information processing performed in the client PC 102. As shown in this drawing, the PLUG-IN MODULE 104 reads the TABLE from the FILE 204 on the HDD 203, at step S0. When the FILE 204 does not exist, the memory area 303 on the RAM 206 shown in Fig. 3 remains blank.

Then, the OS creates the LIST, that is, the list of printers that can be used by the client PC 102, and stores the LIST in the memory area 304, at step S1. The PLUG-IN MODULE 104 selects one of the printers (PRNs) from the LIST and reads a printer driver (DRV) corresponding to the selected printer, at step S2.

The PLUG-IN MODULE 104 checks whether or not the MODEL, that is, information about the selected printer (PRN), exists in the TABLE, at step S3. Where the MODEL exists in the TABLE (YES at step S3), the processing advances to step S5. Otherwise (No at step S3), the processing advances to step S4.

As described above, when it is determined that an entry of the selected printer does not exist in the TABLE, at step S3, the processing advances to step S4. At this step, the PLUG-IN MODULE 104 adds the printer entry to the TABLE, and the processing advances to step S7. Specifically, the PLUG-IN MODULE 104 adds the MODEL, VER, and INFO to the TABLE with reference to information about the Printer Driver that was read, at step S2.

On the other hand, when it is determined, at step S3, that the printer entry exists in the TABLE, the PLUG-IN MODULE 104 makes a version-information comparison, at step S5. When the VER shown in the TABLE is different from that of the Printer Driver (NO at step S5), the processing advances to step S6, so that the PLUG-IN MODULE 104 updates the TABLE. That is to say, the VER and INFO of an entry corresponding to the selected printer in the TABLE of the storing area 303 are updated to VER and INFO read from the DVR.

When the VER in the TABLE is the same as that of the Printer Driver (YES at step S5), the processing advances to step S7. In step S7, the PLUG-IN MODULE 104 checks whether or not the processing of steps S3 to S6 was finished for each of the printers on the LIST. When the processing is not finished for all of the printers, the processing goes back to step S2. When the processing is finished for each of the printers on the LIST, the processing advances to step S8.

At step S8, the PLUG-IN MODULE 104 creates DATA, based on the information in the TABLE, as data to be posted to a predetermined URL via the Browser Software program 103. In this embodiment, the entire INFO in the TABLE is stored in sequence, so that the DATA is formed. The configuration of the DATA can be arbitrarily determined.

Next, the PLUG-IN MODULE 104 issues and transmits a request to the Browser Software program 103 for posting the accumulated data or the DATA to the URL, at step S9.

Then, the PLUG-IN MODULE 104 writes the details of the TABLE into the FILE 204 and frees memories including the storing area 303 of the TABLE, the storing area 304 of the LIST, and so forth, at step S10, and the processing is terminated. On the other hand, the Browser Software program 103 posts the information stored in the DATA to the URL and enters a standby state until new page data arrives. Upon receiving the new page data transmitted from the Web server 101, the Browser Software program 103 displays the new page data on a predetermined window.

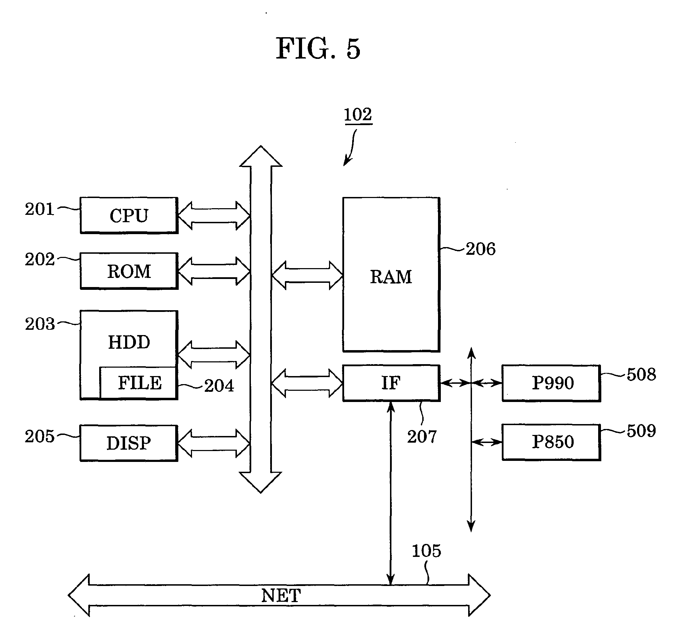

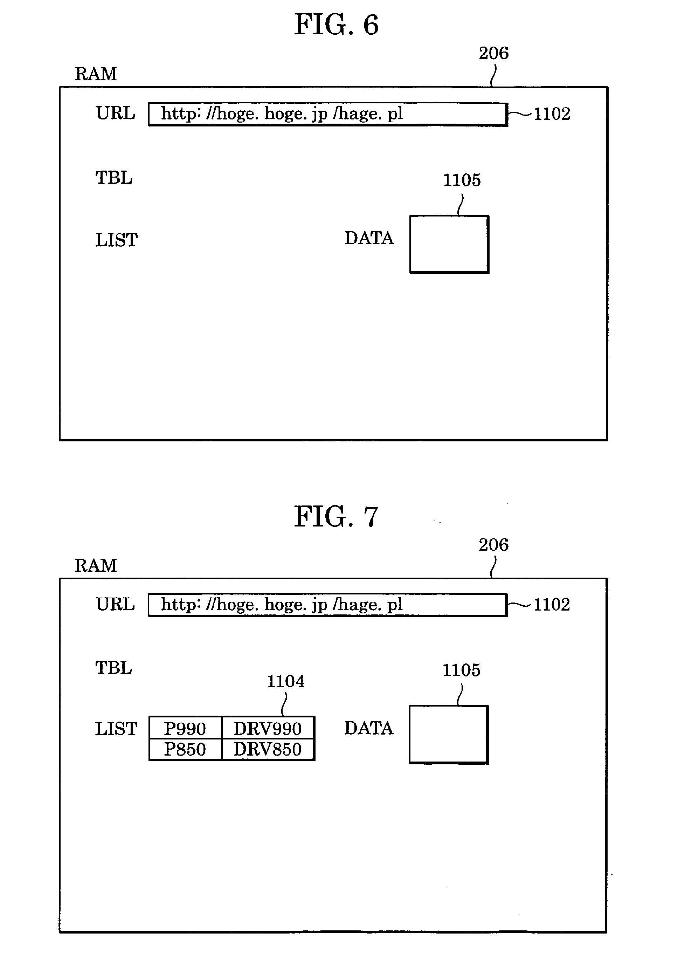

The change in the configuration and details of the data stored in the RAM 206 according to the flow shown in Fig. 4 will now be described in detail with reference to Figs. 5 to 17. Fig. 5 shows an example hardware configuration of the client PC 102. This hardware configuration is different from that of Fig. 2 in that two printers P990 508 and P850 509 are connected to the IF 207. That is to say, the number of printers connected to the IF 207 is decreased from three to two for the sake of simplicity. Figs. 6 to 11 illustrate the change in the configuration and details of the data stored in the RAM 206 according to the flow shown in Fig. 4, in the case where new TABLE is created. Reference numerals 1102, 1103, 1104, 1105, and 1106 shown in Figs. 6 to 11 correspond to reference numerals 302, 303, 304, 305, and 306, respectively, and designate storing areas in the RAM 206.

Fig. 6 illustrates the configuration and details of data of the RAM 206 under the control of PLUG-IN MODULE 104 immediately after the PLUG-IN MODULE 104 is started (before step S0). As shown in this drawing, when the PLUG-IN MODULE 104 is started, a destination URL to which the DATA is posted according to the request transmitted to the Browser Software program 103, at step S9, is already stored in the storing area 1102. Further, the TABLE, the LIST, and the DATA are initialized to blanks.

As shown in the drawing, a printer driver DRV990 for the printer P990 508 and a printer driver DRV850 for the printer P850 509 are not loaded on the RAM 206 under the control of the PLUG-IN MODULE 104 before step S0 is performed. This data configuration is achieved irrespective of whether or not the printer drivers are installed on the OS. Further, the RAM 206 has a storing area 1102 for storing the URL and a storing area 1105 for storing the DATA.

In the state shown in Fig. 6, the processing starts and advances to step S0, where the details of the FILE 204 are read from the HDD 203 and set to the TABLE. In this embodiment, the assumption is made that the FILE 204 does not exist. Subsequently, the TABLE remains blank and the state of the RAM 206 remains the same as that shown in Fig. 6, after the processing of step S0 is finished.

Next, at step S1, the OS creates the LIST and the PLUG-IN MODULE 104 reads the LIST into the RAM 206. Subsequently, a storing area 1104 for storing the LIST is added on the RAM 206, as shown in Fig. 7. In this drawing, the printer names P990 and P850 and the driver names DRV990 and DRV850 are stored in the LIST, as information about the two printers P990 508 and P850 509 that are connected to the client PC 102.

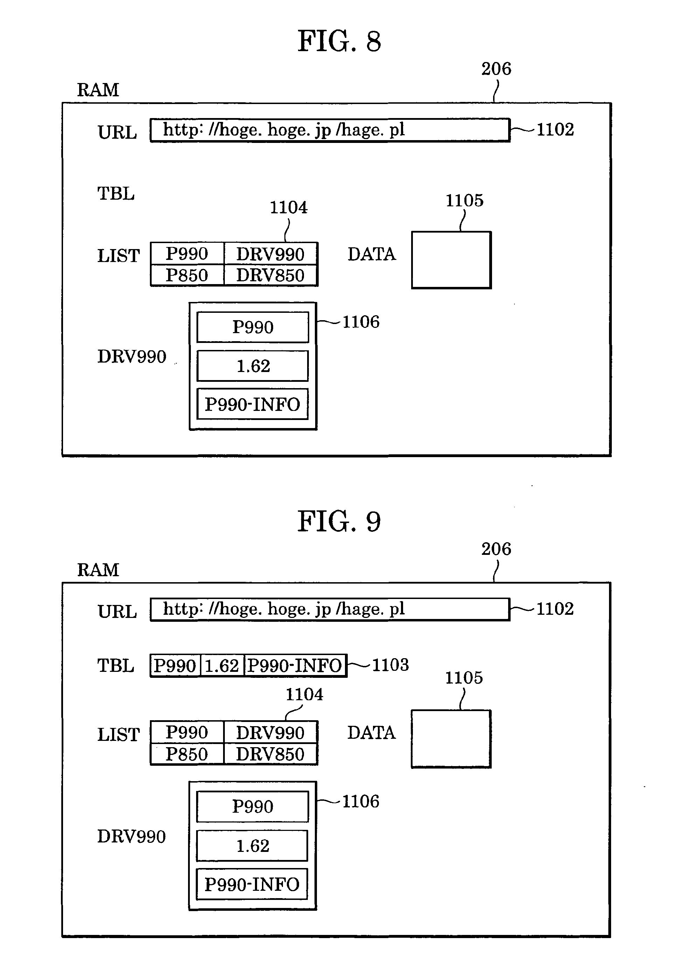

Next, at step S2, the PLUG-IN MODULE 104 selects a predetermined printer from the LIST shown in Fig. 7. For example, when the printer name P990 is selected, the PLUG-IN MODULE 104 reads the driver name DRV 990 corresponding to the printer name P990 shown in the LIST into the storing area 1106 in the RAM 206. Subsequently, the data configuration of the RAM 206 becomes as shown in Fig. 8.

As shown in the storing area 1106 of Fig. 8, the driver name DRV 990 used for the printer P990 is read into the RAM 206. Therefore, version information VER "1.62" and printer information INFO "P990-INFO" can be read, as information stored in the DRV 990. In the state of Fig. 8, the PLUG-IN MODULE 104 starts the processing at step S3.

Then, the PLUG-IN MODULE 104 checks whether or not an entry relating to the printer P990 508 exists in the TABLE, at step S3. Since the area for storing the TABLE remains blank, or the storing area does not exist, as shown in Figs. 7 and 8, it is determined to be "NO" at step S3, and the processing advances to step S4.

Next, the PLUG-IN MODULE 104 creates the entry relating to the printer P990 508 with reference to the information of the DRV 990, at step S4. More specifically, the PLUG-IN MODULE 104 reads the VER and INFO of the DRV 990 into the TABLE, so that the VER and INFO are set thereto. Subsequently, as shown in Fig. 9, the storing area 1103 is provided and the printer environment information relating to the printer P990 is stored therein, as the TABLE.

In the state shown in Fig. 9, it is checked whether or not the above-described processing was finished for each of the printers on the LIST, at step S7. Since the processing was not performed for the printer P850 509, the processing goes back to step S2.

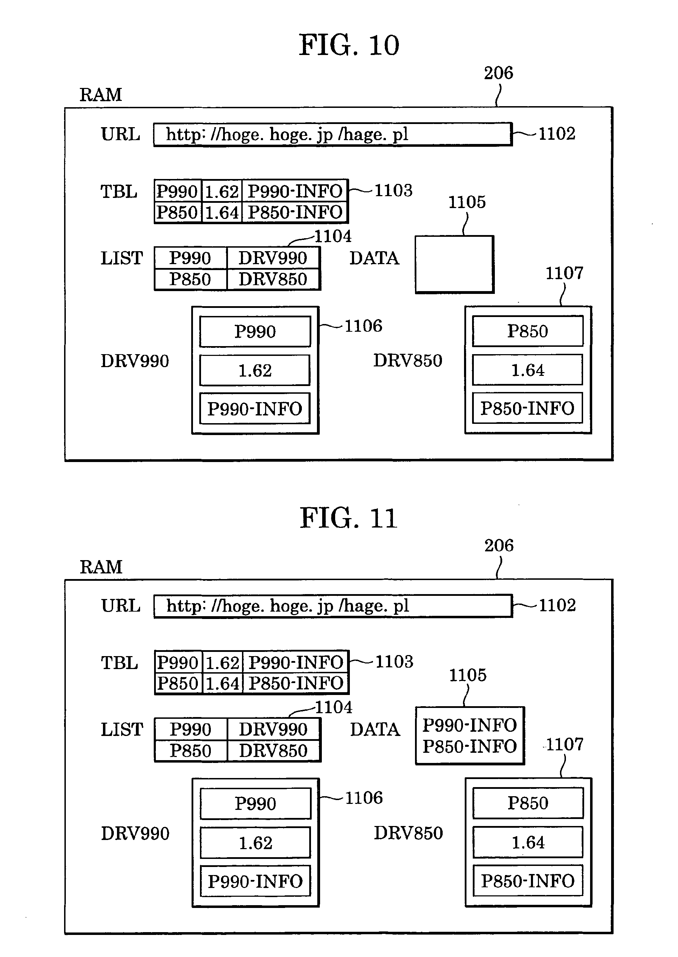

The processing for the printer P850 509 is performed in the same manner as that for the above-described printer P990 508. That is to say, the PLUG-IN MODULE 104 reads the driver name DRV 850 for the printer P850 into the RAM 206, at step S2. Since it is determined that an entry relating to the printer P850 does not exist in the TABLE, at step S3, the processing advances to step S4, so that the entry relating to the printer P850 509 is added to the TABLE. Subsequently, a storing area 1107 is provided and the DRV 850 is stored therein, as shown in Fig. 10. That is to say, the printer environment information relating to the P850 is further added to the TABLE. Since the processing at step S7 was finished for each of the printers on the list, as shown in Fig. 10, the processing advances to step S8.

The PLUG-IN MODULE 104 stores "P990-INFO" and "P850-INFO" in the TABLE in the storing area 1105, as the DATA, at step S8. Subsequently, the details of DATA are stored, as shown in Fig. 11.

In the state of Fig. 11, the PLUG-IN MODULE 104 transmits an instruction to the Browser Software program 103 for posting the DATA to a predetermined URL, at step S9. The PLUG-IN MODULE 104 writes the details of the TABLE into the FILE 204, at step S10, and the processing is terminated.

After the PLUG-IN MODULE 104 is terminated, the Browser Software program 103 posts the DATA to the URL and waits for the arrival of page data transmitted from the URL. When the page data arrives, the Browser Software program 103 displays a screen corresponding to the page data transmitted to the window thereof.

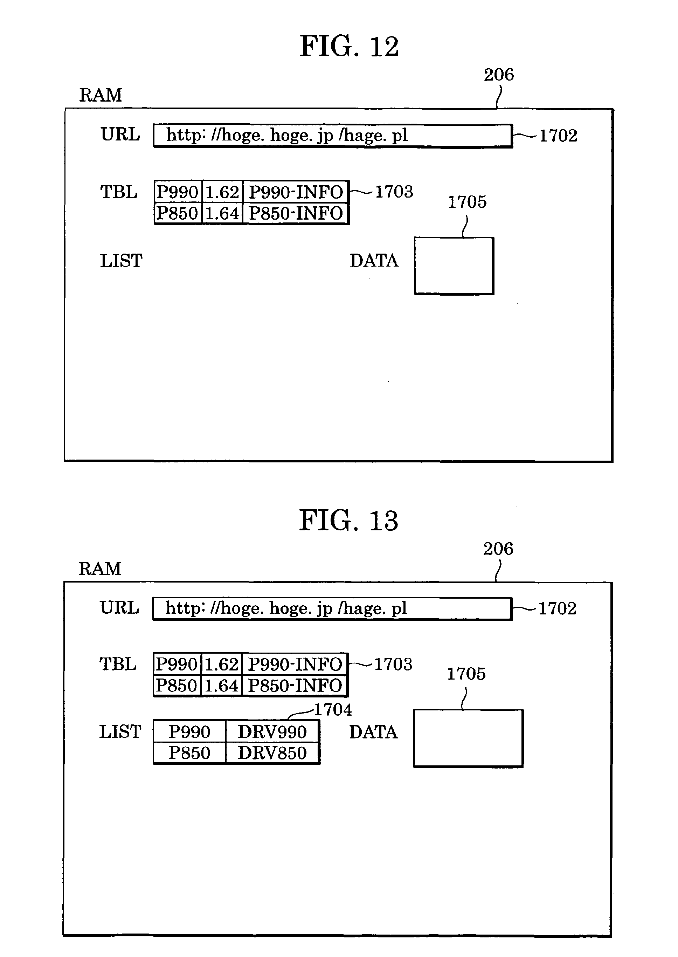

The processing described with reference to Figs. 6 to 11 is performed without using the TABLE that is to be read (existing environment information), since the TABLE did not exist, at step S0. Therefore, the TABLE is generated and the details thereof are stored in the FILE 204. Figs. 12 to 17 illustrate processing procedures performed for creating environment information at a reduced processing load by using the environment information created through the processing procedures shown in Figs. 6 to 11. Figs. 12 to 17 illustrate the configuration and details of data that change according to the flowchart shown in Fig. 4, in the case where the existing environment information is used. Storing areas 1702 to 1707 shown in Figs. 12 to 17 correspond to the storing areas 1102 to 1107, respectively, shown in Figs. 6 to 11. The storing areas 1702 to 1707 are provided in the RAM 206, corresponding to processing procedures performed by the PLUG-IN MODULE 104.

When the PLUG-IN MODULE 104 is restarted after only the DRV 990 is updated to Version 1.7, the following processing is performed. First, the restarted PLUG-IN MODULE 104 reads the details of a file indicated by the FILE 204 on the HDD 203, at step S0. Since the processing shown in Figs. 6 to 11 is finished, the information about the printer P990 508 and the printer P850 509 is stored in the FILE 204. Fig. 12 shows the data configuration of the RAM 206 in the state where the step S0 is finished. It is to be noted that the URL information transmitted from the Browser Software program 103 to the PLUG-IN MODULE 104 is the same as that shown in Fig. 6. The URL information is stored in the storing area 1702 and the TABLE is stored in the storing area 1703, as shown in Fig. 12. Although not shown in this drawing, the DATA is stored in the storing area 1705.

In the state shown in Fig. 12, the OS creates the LIST and the PLUG-IN MODULE 104 reads the created LIST into the RAM 206, at step S1. Subsequently, the storing area 1704 is provided, as shown in Fig. 13, so that the LIST is stored therein.

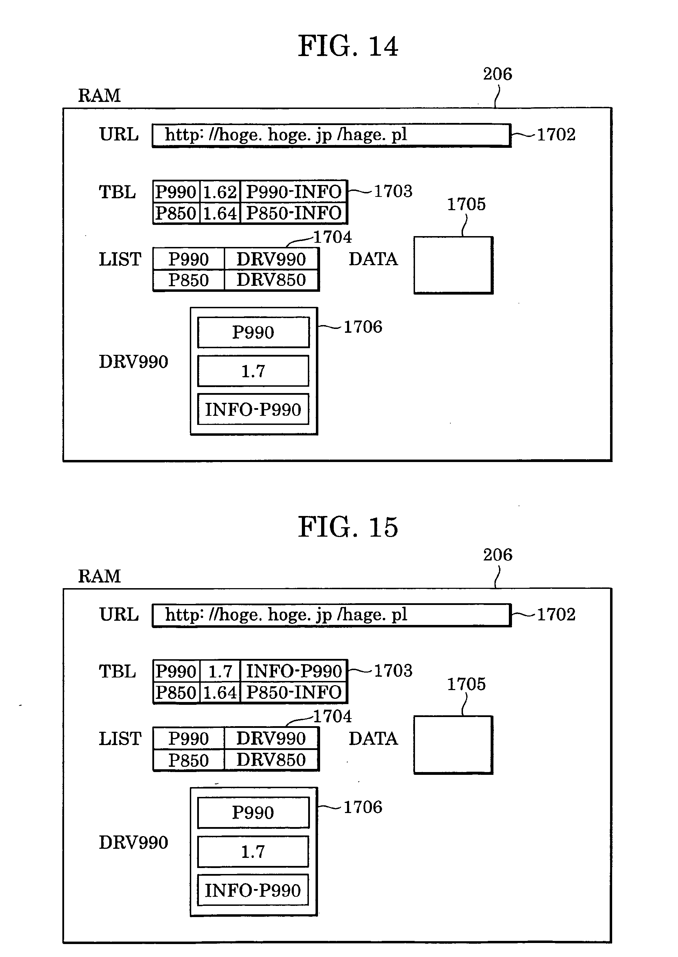

In the state shown in Fig. 13, the PLUG-IN MODULE 104 selects one of the printers shown on the LIST, at step S2, and a printer driver corresponding to the selected printer is loaded to the RAM 206. Since the selected printer names are P990 and P850, the DRV 990 is read into the RAM 206. Subsequently, the storing area 1706 is provided, as shown in Fig. 14, so that the DRV 990 is stored therein. The state of Fig. 14 is different from that of Fig. 8 in that the value of VER, that is, version information shown in the DRV 990, is "1.7" in place of "1.62". Further, the value of INFO of the printer information is indicated as "INFO-P990" in place of "P990-INFO"

In the state shown in Fig. 14, the PLUG-IN MODULE 104 makes a comparison between the value of MODEL in the TABLE and the printer name, at step S3. Since the MODEL value is equivalent to the printer name in this case, the processing advances to step S5. The PLUG-IN MODULE 104 determines whether or not the value of VER of the entry relating to the P990 on the TABLE is equivalent to that of the VER of the DRV 990 read into the RAM 206. Since the VER values are different from each other, the processing advances to step S6.

The PLUG-IN MODULE 104 updates the VER and INFO of the entry relating to the 990 on the TABLE to "1.7" and "INFO-P990", respectively. That is to say, information on the upper row of the TABLE of the storing area 1703 shown in Fig. 14 is updated, as shown in Fig. 15. Then, in the state shown in Fig. 15, the PLUG-IN MODULE 104 determines whether or not the above-described processing was finished for each of the printers, at step S7. Since the processing has not yet been performed for the printer P850 509, the processing goes back to step S2.

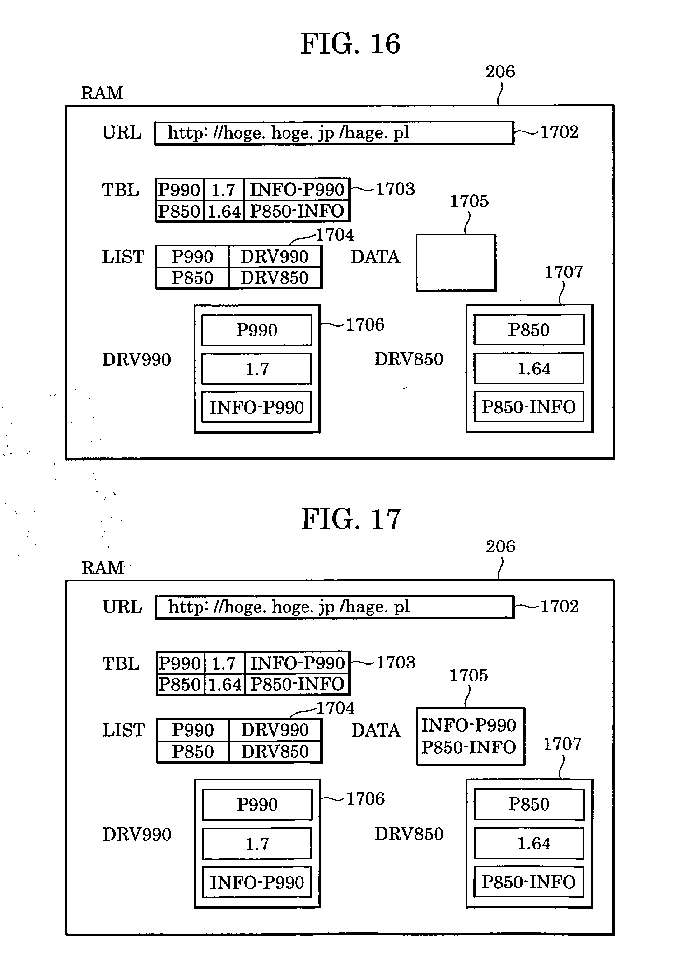

As shown in Fig. 16, the PLUG-IN MODULE 104 reads the DRV 850 for the printer P850 509 into the storing area 1707 of the RAM 206, at step S2. Then, the PLUG-IN MODULE 104 makes a comparison between the MODEL value on the TABLE and the printer name, at step S3. When both the MODEL value and the printer name indicate P850, the processing advances to step S5. Then, the PLUG-IN MODULE 104 makes a comparison between the VER value of the entry of the P850 in the TABLE and the VER value of the DRV 850 read into the RAM 206. When it is determined that the above-described two values are equivalent to each other, the processing advances to step S7. At this step, the PLUG-IN MODULE 104 determines whether or not the processing was performed for each of the printers. When it is determined that the processing was finished for each of the printers, the processing advances to step S8.

At this step, the PLUG-IN MODULE 104 writes "INFO-P990, P850-INFO", as the DATA posted from the TABLE. Subsequently, the details of data are stored, as shown in Fig. 17.

In the state shown in Fig. 17, the PLUG-IN MODULE 104 transmits an instruction to the Browser Software program 103, the instruction being transmitted for posting the DATA to a predetermined URL, at step S9. Then, the PLUG-IN MODULE 104 writes the details of the TABLE into the FILE 204, at step S10, and the processing is terminated. After the processing of the PLUG-IN MODULE 104 is finished, the Browser Software program 103 posts the DATA to the URL and waits for the arrival of page data transmitted from the URL.

As has been described, the client PC 102 of this embodiment can store the created environment information (the details of the TABLE) in the FILE 204. Therefore, when new TABLE (new environment information) is required, it becomes possible to refer to the existing environment information stored in the FILE 204 and use it, as it is, when there is no change in the printer name and the version name. Subsequently, the load of processing, such as extraction of the environment information stored in the printer driver can be eliminated.

The environment information may include information only about printers to which the Web server 101 presents services. In that case, the Web server 101 informs the client PC 102 of the MODEL information of printers to which the Web server 101 presents services. Then, the client PC 102 selects a printer corresponding to the MODEL information transmitted from the Web server 101, at step S2.

In the above-described embodiment, a program for performing the functions of the client PC 102 is read into a memory and the CPU 201 executes the read program, so as to achieve the above-described functions. However, the present invention is not limited to the above-described configuration. That is to say, part of or the entire process can be executed by purpose-built hardware. Further, the above-described memory may be, for example, a magneto-optical disk, a non-volatile memory such as a flash memory, a read-only recording medium such as a CD-ROM, a volatile memory other than a RAM, and a computer readable/writable recording medium that is formed as a combination of the above-described mediums.

Further, it may be arranged that the program for performing the functions of performing various processing procedures in the client PC 102 is stored in a computer-readable recording medium so that a predetermined computer system reads the program and performs the above-described functions and the various processing procedures are performed. Here, the term "computer system" denotes a system including hardware such as an OS and peripheral devices.

Further, the "computer-readable recording medium" may be, for example, a flexible disk, a magneto-optical disk, a ROM, a transportable medium such as a CD-ROM, or a storage device such as a hard disk mounted in the computer system. Still further, the "computer-readable recording medium" includes a recording medium that can retain a program for a predetermined time period. For example, the recording medium can be a volatile memory (RAM) in the computer system functioning as a server, or a client, where the program is transmitted via a network such as the Internet and a communications line such as a telephone line.

Further, the above-described program may be transferred from the computer system storing the above-described program in a storage device or the like to another computer system via a transfer medium, or a transfer wave in the transfer medium. Here, the term "transfer medium" denotes a medium having the functions of transferring information. The transfer medium may be, for example, a network (communications network) such as the Internet, or a communications line such as a telephone line. The above-described program may be configured, only for achieving part of the above-described functions. Still further, the above-described program may be a difference file (a difference program) that can achieve the above-described functions in conjunction with a program stored in the computer system.

Further, a program product such as a computer-readable recording medium storing the above-described program can be used for the embodiment of the present invention. The above-described program, recording medium, transfer medium, and program product fall within the scope of the present invention. While the present invention has been described with reference to exemplary embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

This application claims priority from Japanese Patent Application No. 2003-397755 filed on November 27, 2003, which is hereby incorporated by reference herein.

## Claims

1. An information processing apparatus that can use contents provided by a Web server through a browser software program in the information processing apparatus, the information processing apparatus comprising:
a creating unit for creating/updating environment information;
a storing unit for storing the created/updated environment information in a storage device; and
a transmission unit for transmitting the created/updated environment information to the Web server via a network,
wherein after the creating unit has created environment information, the creating unit updates the environment information in response to an environment-information request transmitted from the Web server with reference to the environment information stored in the storage device, and
wherein the contents presented by the Web server is determined according to the environment information.

2. The information processing apparatus according to Claim 1, wherein the environment information is information about at least one peripheral device connected to the information processing apparatus and an utilization program for utilizing the at least one peripheral device, the information processing apparatus further comprising:
an obtaining unit for obtaining information about the peripheral device and the utilization program,
wherein in case that the creating unit compares the information obtained by the obtaining unit to the environment information stored in the storage device, and the information obtained by the obtaining unit and the environment information stored in the storage device are equivalent, the creating unit stops creating/updating the environment information.

3. The information processing apparatus according to Claim 1, wherein the environment information is information about at least one peripheral device connected to the information processing apparatus and a utilization program for utilizing the at least one peripheral device, the information processing apparatus further comprising:
an obtaining unit for obtaining information about the peripheral device and the utilization program,
wherein in case that the creating unit compares the information obtained by the obtaining unit and the environment information stored in the storage device, and peripheral-device information of the information obtained by the obtaining unit agrees with peripheral-device information of the environment information stored in the storage device and utilization-program information of the information obtained by the obtaining unit is different from utilization-program information of the environment information stored in the storage device, the creating unit updates the environment information by updating the utilization-program information of the environment information stored in the storage device.

4. The information processing apparatus according to Claim 1, wherein the environment information is information about at least one printer connected to the information processing apparatus and a printer driver program for utilizing the at least one printer, and wherein the Web server presents print services via the network.

5. The information processing apparatus according to Claim 1, wherein the environment information is information about at least one printer connected to the information processing apparatus and a printer driver program for utilizing the at least one printer, the information processing apparatus further comprising:
a reception unit for receiving information about a model name of the printer transmitted from the Web server,
wherein the creating unit creates/updates the environment information based on information about a printer corresponding to the printer-model information transmitted from the Web server and the information about the printer driver program for utilizing the at least one printer.

6. A method for controlling an information processing apparatus that can use contents presented by a Web server through a browser software program in the information processing apparatus, the controlling method comprising steps of:
creating/updating environment information;
storing the created/updated environment information in a storage device; and
transmitting the created/updated environment information to the Web server via a network,
wherein after environment information has been created and stored in the storage device, the environment information is updated in response to an environment-information request transmitted from the Web server with reference to the environment information stored in the storage device, and
wherein the contents presented by the Web server is determined according to the environment information.

7. A program for making a computer system perform a method for controlling an information processing apparatus that can use contents presented by a Web server through a browser software program in the information processing apparatus, the program comprising steps of:
creating/updating environment information;
storing the created/updated environment information in a storage device; and
transmitting the created/updated environment information to the Web server via a network,
wherein after environment information has been created and stored in the storage device, the environment information is updated in response to an environment-information request transmitted from the Web server with reference to the environment information stored in the storage device, and
wherein the contents presented by the Web server is determined according to the environment information.
